(19) **Europäisches Patentamt**

**European Patent Office**

**Office européen des brevets**

(11) **EP 1 681 172 A2**

(12) **EUROPÄISCHE PATENTANMELDUNG**

(43) Veröffentlichungstag:
**19.07.2006 Patentblatt 2006/29**

(51) Int Cl.:
**B41J 3/01** *(2006.01)* **G06K 19/06** *(2006.01)*

(21) Anmeldenummer: **06000235.9**

(22) Anmeldetag: **06.01.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **08.01.2005 DE 202005000255 U**

(71) Anmelder: **Francotyp-Postalia GmbH**
**16547 Birkenwerder (DE)**

(72) Erfinder: **Nisius, Raimund**
**12165 Berlin (DE)**

(74) Vertreter: **Cohausz & Florack**
**Patent- und Rechtsanwälte**
**Bleichstrasse 14**
**40211 Düsseldorf (DE)**

(54) **Druckeinrichtung**

(57) Druckeinrichtung mit einem nach dem Tintenstrahlprinzip arbeitenden Druckkopf (5) und einer den Druckkopf (5) zum Erzeugen eines zweidimensionalen Barcodes ansteuernden Steuereinrichtung (6), wobei der Barcode (1) eine Matrix aus einer Mehrzahl von Bildfeldern (1.1, 1.2) umfasst, der Barcode (1) wenigstens ein durch den Druckkopf (5) mit einer Mehrzahl von Bildpunkten bedrucktes erstes Bildfeld (1.1) und wenigstens ein im Wesentlichen unbedrucktes zweites Bildfeld (1.2) umfasst, und die Steuereinrichtung zur Umwandlung von die Lage und Größe der Bildfelder (1.1, 1.2) definierenden Barcodedaten in Ansteuersignale für den Druckkopf (5) ausgebildet ist, und wobei die Steuereinrichtung (6) zur Umwandlung der Barcodedaten in Ansteuersignale für den Druckkopf (5) derart ausgebildet ist, dass wenigstens ein erstes Bildfeld (1.1) mit einer geringeren Anzahl von Bildpunkten bedruckt ist, als den Barcodedaten entspricht.

Fig. 6

EP 1 681 172 A2

**Beschreibung**

Die vorliegende Erfindung betrifft eine Druckeinrichtung mit einem nach dem Tintenstrahlprinzip arbeitenden Druckkopf und einer den Druckkopf zum Erzeugen eines zweidimensionalen Barcodes ansteuernden Steuereinrichtung, wobei der Barcode eine Matrix aus einer Mehrzahl von Bildfeldern umfasst, der Barcode wenigstens ein durch den Druckkopf mit einer Mehrzahl von Bildpunkten bedrucktes erstes Bildfeld und wenigstens ein im Wesentlichen unbedrucktes zweites Bildfeld umfasst, und die Steuereinrichtung zur Umwandlung von die Lage und Größe der Bildfelder definierenden Barcodedaten in Ansteuersignale für den Druckkopf ausgebildet ist. Sie betrifft weiterhin einen entsprechenden abgedruckten Barcode.

Für eine Reihe von Anwendungen werden sogenannte zweidimensionale Barcodes verwendet. Ein solcher zweidimensionaler Barcode ist eine martrixartige Anordnung von Bildfeldern bzw. Farbflächen, so genannten Modulen, gleicher Größe deren Helligkeitswert "hell" bzw. "dunkel" von entsprechenden Lesegeräten als je ein Bit Information interpretiert wird. So fordert beispielsweise die kanadische Post für ihre Frankierabdrucke einen solchen zweidimensionalen Barcode unter Verwendung des Data Matrix Codes ECC200 mit einer Größe von 40 x 40 quadratischen Modulen gleicher Größe auf einem Frankierbereich der Höhe 1 Zoll.

Bei Verwendung von nach dem Tintenstrahlprinzip arbeitenden Druckern, besteht hierbei zum einen das Problem, dass die durch die Tinte erzeugten Bildpunkte auf der verwendeten Unterlage, beispielsweise Papier, keine scharfe Abbildung des jeweiligen Moduls erzeugt. Die Tinte verläuft zu einem nicht rechteckigen Fleck, dessen Form und Größe von Parametern wie Tintenviskosität, Oberflächenspannung, Papierqualität, Tintenmenge etc. abhängt. Tendenziell ist die bedruckte Fläche größer als die exakte Fläche, die eigentlich den für die Erzeugung des Barcodes verwendeten Barcodedaten entspricht. Für den gedruckten Barcode hat dies die Konsequenz, dass die Fläche eines bedruckten, "dunklen" Moduls größer ist als die Fläche eines nicht bedruckten, "hellen" Moduls. Dies führt häufig zu Lesefehlern beim Lesen des Barcodes. Die verwendete Leseeinrichtung muss dann die Fehlerkorrekturbits des Barcodes verwenden, um die entsprechende Information zu erhalten. Je nach Qualität des Barcodes schlägt auch diese Überprüfung unter Umständen fehl, sodass die Information des Barcodes nicht gelesen werden kann.

Ein weiteres Problem liegt häufig in der Auflösung des verwendeten Druckkopfs. Bestehen neben der Vorgabe der Anzahl der Bildfelder, d.h. Module, des Barcodes zusätzlich Vorgaben hinsichtlich der Gesamtmaße des Barcodes, wie dies häufig bei Frankierabdrucken der Fall ist, so kann es je nach Auflösung des verwendeten Druckkopfs unter Umständen erforderlich sein, eine deutlich geringere Düsenanzahl als verfügbar für die Erzeugung der Module zu verwenden. Soll beispielsweise der oben beschriebene Barcode der kanadischen Post mit einem Druckkopf mit einer Auflösung von 192 dpi gedruckt werden, so können für jedes Modul maximal vier Düsen genutzt werden, um Module gleicher Größe zu erzeugen. Anstelle der 192 Düsen werden somit nur 160 Düsen des Druckkopfs genutzt. Das jeweilige Modul wird dadurch kleiner, wodurch sich die oben beschriebenen Probleme beim Lesen des Barcodes weiter verschärfen.

Der vorliegenden Erfindung liegt daher die Aufgabe zu Grunde, eine Druckeinrichtung bzw. einen zweidimensionalen Barcode der eingangs genannten Art zur Verfügung zu stellen, welche die oben genannten Nachteile nicht oder zumindest in geringerem Maße aufweist und insbesondere auf einfache Weise eine gute Lesbarkeit des Barcodes sicherstellt.

Die vorliegende Erfindung löst diese Aufgabe ausgehend von einer Druckeinrichtung gemäß dem Oberbegriff des Anspruchs 1 durch die im kennzeichnenden Teil des Anspruchs 1 angegebenen Merkmale. Sie löst diese Aufgabe weiterhin ausgehend von einem zweidimensionalen Barcode gemäß dem Oberbegriff des Anspruchs 15 durch die im kennzeichnenden Teil des Anspruchs 15 angegebenen Merkmale.

Der vorliegenden Erfindung liegt die technische Lehre zu Grunde, dass man eine verbesserte Lesbarkeit des zweidimensionalen Barcodes erzielt, wenn die Steuereinrichtung zur Umwandlung der Barcodedaten in Ansteuersignale für den Druckkopf derart ausgebildet ist, dass wenigstens ein erstes Bildfeld mit einer geringeren Anzahl von Bildpunkten bedruckt ist, als den Barcodedaten entspricht.

Durch die erfindungsgemäße Reduktion der Anzahl der Bildpunkte, also der Tintentropfen, mit denen das erste Bildfeld bedruckt wird, gegenüber der durch die Barcodedaten theoretisch vorgegebenen Anzahl lässt sich in einfacher Weise ein Abdruck erzielen, bei dem unter Berücksichtigung der verlaufenden Tinte ein besseres Flächenverhältnis der bedruckten, "dunklen" Module und der nicht bedruckten, "hellen" Module ergibt. Dieses wirkt sich positiv auf die Lesbarkeit des Barcodes aus.

Weiterhin ist es mit der vorliegenden Erfindung möglich, durch stellenweise Reduktion der Anzahl der Bildpunkte, also der Tintentropfen, mit denen das erste Bildfeld bedruckt wird, gegenüber der durch die Barcodedaten theoretisch vorgegebenen Anzahl stellenweise ein kleineres Bildfeld zu erzeugen, während in anderen Bereichen größere, in der Regel besser zu lesende Bildfelder erzeugt werden. Hierdurch lässt sich der Barcode in einfacher Weise an die jeweilige Auflösung des verwendeten Druckkopfs anpassen, sodass eine möglichst große Anzahl der vorhandenen Düsen des Druckkopfs genutzt werden können.

Vorzugsweise ist daher vorgesehen, dass die Steuereinrichtung zur Umwandlung der Barcodedaten in Ansteuersignale für den Druckkopf derart ausgebildet ist, dass wenigstens ein erstes Bildfeld eine geringere Größe aufweist, als den Barcodedaten entspricht. Um das hierdurch entstehende Risiko schlechterer Lesbarkeit zum minimieren bzw. auszuschließen, ist bevorzugt vorgesehen, dass das erste Bildfeld verringerter Größe in einem Bereich des Barcodes angeordnet ist, der keine Nutzinformation enthält. Solche Bereiche ohne Nutzinformation, die beispielsweise lediglich der Lage- und/oder Rastererkennung dienen, sind in der Regel in allen üblichen zweidimensionalen Barcodes vorhanden.

Die Bildpunkte können grundsätzlich an beliebiger Stelle weggelassen sein. So kann beispielsweise lediglich eine lokale oder flächendeckende Ausdünnung vorgesehen sein, sodass auf eine bestimmte Fläche insgesamt eine geringere Tintenmenge aufgebracht ist, die dann weniger weit ausufernd verläuft. Unter dem Begriff "Ausdünnung" soll dabei im Sinne der vorliegenden Erfindung verstanden werden, dass in einer Richtung in bestimmten festen oder variablen Abständen einzelne Bildpunkte weggelassen sind.

Besonders vorteilhaft ist es jedoch, wenn die Bildpunkte im Randbereich des ersten Bildfelds weggelassen sind, da die oben geschilderten Probleme in diesem Randbereich besonders stark zum Tragen kommen. Bevorzugt ist die Steuereinrichtung daher zum Weglassen von Bildpunkten in wenigstens einem ersten Randabschnitt des ersten Bildfelds ausgebildet. Auch hierbei kann wiederum lediglich eine Ausdünnung des Randabschnitts vorgesehen sein. Bevorzugt ist die Steuereinrichtung allerdings zum Weglassen wenigstens einer ersten Reihe benachbarter Bildpunkte in wenigstens einem ersten Randabschnitt des ersten Bildfelds ausgebildet.

Der erste Randabschnitt kann in beliebigen Bereichen des ersten Bildfelds angeordnet sein. Besonders vorteilhaft wirkt es sich aus, wenn der erste Randabschnitt an ein zweites Bildfeld angrenzt, da in diesem Bereich gerade die oben geschilderten Probleme mit dem Verlaufen der Tinte in ein eigentlich nicht bedrucktes Bildfeld entstehen könnten und mit der Erfindung vermieden werden können. Bevorzugt ist daher vorgesehen, dass die Steuereinrichtung zum Weglassen von Bildpunkten in allen Randabschnitten des ersten Bildfelds ausgebildet ist, die an ein zweites Bildfeld angrenzen.

Das Weglassen von Bildpunkten kann sich auf einzelne erste Bildfelder beschränken. Dies können beispielsweise nur diejenigen ersten Bildfelder sein, an die wenigstens über eine bestimmte Länge ein zweites Bildfeld angrenzt. Bei weiteren vorteilhaften Varianten der erfindungsgemäßen Druckeinrichtung ist die Steuereinrichtung zum Weglassen von Bildpunkten in wenigstens einem ersten Randabschnitt aller ersten Bildfelder ausgebildet. Eine Berücksichtigung der benachbarten Bildfelder ist hierbei dann nicht nötig, wodurch sich der Verarbeitungsaufwand und damit auch der Aufwand für die Steuereinrichtung besonders gering gestaltet. Vorzugsweise weist der erste Randabschnitt jeweils in eine erste Richtung. Mit anderen Worten ist der erste Randabschnitt in den ersten Bildfeldern jeweils an derselben Stelle angeordnet.

Um die oben bereits geschilderte Anpassung des Barcodes an die Auflösung des Druckkopfs zu erzielen, ist bevorzugt vorgesehen, dass die Steuereinrichtung zur Umwandlung der Barcodedaten in Ansteuersignale für den Druckkopf derart ausgebildet ist, dass wenigstens in einer ersten Richtung jedes i-te Bildfeld in der ersten Richtung eine geringere Grö-βe aufweist, als den Barcodedaten entspricht. Die erste Richtung verläuft dabei dann bevorzugt senkrecht zur Druckrichtung, d. h. der Richtung der Relativbewegung zwischen Druckkopf und Unterlage. Um eine entsprechende Wirkung gegebenenfalls auch in der Druckrichtung zu erzielen, ist die Steuereinrichtung vorzugsweise zur Umwandlung der Barcodedaten in Ansteuersignale für den Druckkopf derart ausgebildet ist, dass in einer zur ersten Richtung quer verlaufenden zweiten Richtung des jedes k-te Bildfeld in der zweiten Richtung eine geringere Größe aufweist, als den Barcodedaten entspricht.

Um die Verzerrung des Barcodes gering zu halten, kann vorgesehen sein, dass *i = k ist.* Somit ergeben sich dann in einem Barcodebereich aus i x i Bildfeldern und einer Normalgröße von n x n Bildpunkten folgende Größenverteilung der Bildfelder:

- ($i$-1) x ($i$-1) Bildfelder der Größe n x n Bitdpunkte

- ($i$-1) Bildfelder der Größe n x (n-1) Bildpunkte,

- (i-1) Bildfelder der Größe (n-1) x n Bildpunkte,

- ein Bildfeld der Größe (n -1) x (n -1) Bildpunkte.

Der sich hierbei ergebende Skalierfaktor S ist somit:

$$S = \frac{(i-1)\cdot n + (n-1)}{i\cdot n} = \frac{i\cdot n - 1}{i\cdot n}, \qquad (1)$$

d. h. nicht ganzzahlig.

Wie bereits erwähnt, kann sich die Reduktion der Bildpunkte auf einzelne erste Bildfelder beschränken. Bei hinsichtlich des Steuerungsaufwands vorteilhaften Varianten der erfindungsgemäßen Druckeinrichtung ist vorgesehen, dass die Steuereinrichtung zur Umwandlung der Barcodedaten in Ansteuersignale für den Druckkopf derart ausgebildet ist, dass alle ersten Bildfelder des Barcodes mit einer geringeren Anzahl von Bildpunkten bedruckt sind, als den Barcodedaten entspricht.

Die beschriebene Reduktion der Bildpunkte kann sowohl durch Software erzielt werden, also ein entsprechendes Programm, auf welches die Steuereinrichtung zugreift. Im Hinblick auf eine schnelle Umwandlung der Barcodedaten in Ansteuersignale ist jedoch bevorzugt eine entsprechend ausgebildete anwendungsspezifische Hardware vorgesehen, welche die beschriebene Reduktion der Bildpunkte bewirkt. Bevorzugt umfasst die Steuereinrichtung dabei eine Filtereinrichtung zur Reduktion der Anzahl von Bildpunkten des ersten Bildfelds.

Die vorliegende Erfindung lässt sich im Zusammenhang mit beliebigen Anwendungen einsetzen, bei denen ein zweidimensionaler Barcode über einen Tintenstrahldrucker erzeugt werden soll. Wegen der dort bestehenden strengen Größenvorgaben für den Barcode lässt sie sich besonders vorteilhaft im Zusammenhang mit der Erzeugung von Frankierabdrukken einsetzen. Die vorliegende Erfindung betrifft daher weiterhin eine Frankiermaschine mit einer erfindungsgemäßen Druckeinrichtung.

Die vorliegende Erfindung betrifft weiterhin einen zweidimensionalen Barcode, der eine Matrix aus einer Mehrzahl von Bildfeldern umfasst, wenigstens ein durch einen nach dem Tintenstrahlprinzip arbeitenden Druckkopf mit einer Mehrzahl von Bildpunkten bedrucktes erstes Bildfeld und wenigstens ein im Wesentlichen unbedrucktes zweites Bildfeld umfasst, Erfindungsgemäß ist wenigstens ein erstes Bildfeld derart mit einer reduzierten Anzahl von Bildpunkten bedruckt, dass sich in dem ersten Bildfeld eine bedruckte Fläche ergibt, die im Wesentlichen höchstens gleich der Fläche des zweiten Bildfeldes ist. Vorzugsweise ist die bedruckte Fläche des ersten Bildfelds geringer ist als die Fläche des zweiten Bildfeldes.

Mit einem solchen Barcode lassen sich die oben im Zusammenhang mit der erfindungsgemäßen Druckeinrichtung beschriebenen Vorteile und Varianten in demselben Maße realisieren, sodass hier auf die obigen Ausführungen Bezug genommen wird.

Bevorzugt wurde der Barcode unter Verwendung von die Lage und eine konstante Größe der Bildfelder definierenden Barcodedaten erzeugt und das erste Bildfeld ist dann mit einer geringeren Anzahl von Bildpunkten bedruckt, als den Barcodedaten entspricht.

Vorzugsweise sind in wenigstens einem ersten Randabschnitt des ersten Bildfelds Bildpunkte weggelassen. Bevorzugt ist dabei in wenigstens einem ersten Randabschnitt des ersten Bildfelds wenigstens eine erste Reihe benachbarter Bildpunkte weggelassen. Weiter vorzugsweise grenzt der erste Randabschnitt dann an ein zweites Bildfeld an. Weiter vorzugsweise sind in allen Randabschnitten des ersten Bildfelds, die an ein zweites Bildfeld angrenzen, Bildpunkte weggelassen. Bevorzugt sind in wenigstens einem ersten Randabschnitt aller ersten Bildfelder Bildpunkte weggelassen. Der erste Randabschnitt weist dann vorzugsweise in eine erste Richtung.

Bei vorteilhaften Varianten des erfindungsgemäßen zweidimensionalen Barcodes ist vorgesehen, dass wenigstens in einer ersten Richtung des jedes i-te Bildfeld in der ersten Richtung eine geringere Größe als das zweite Bildfeld aufweist. Vorzugsweise weist dabei in einer zur ersten Richtung quer verlaufenden zweiten Richtung des jedes k-te Bildfeld in der zweiten Richtung eine geringere Größe als das zweite Bildfeld auf. Dabei kann insbesondere i = k sein.

Bei weiteren vorteilhaften Varianten des erfindungsgemäßen zweidimensionalen Barcodes sind alle ersten Bildfelder derart mit einer reduzierten Anzahl von Bildpunkten bedruckt, dass sich in dem jeweiligen ersten Bildfeld eine bedruckte Fläche ergibt, die im Wesentlichen höchstens gleich der Fläche des zweiten Bildfeldes ist.

Die vorliegende Erfindung betrifft schließlich noch einen Frankierabdruck mit einem erfindungsgemäßen zweidimensionalen Barcode.

Weitere bevorzugte Ausgestaltungen der Erfindung ergeben sich aus den Unteransprüchen bzw. der nachstehenden Beschreibung eines bevorzugten Ausführungsbeispiels, welche auf die beigefügten Zeichnungen Bezug nimmt. Es zeigen

Figur 1    eine Darstellung einer bevorzugten Ausführungsform des erfindungsgemäßen zweidimensionalen Barcodes;

Figur 1A    das Detail A aus Figur 1;

Figur 2    eine Darstellung einer weiteren bevorzugten Ausführungsform des erfindungsgemäßen zweidimensionalen Barcodes;

Figur 2A    das Detail A aus Figur 2;

Figur 3    eine Darstellung einer weiteren bevorzugten Ausführungsform des erfindungsgemäßen zweidimensionalen Barcodes;

Figur 3A    das Detail A aus Figur 3;

Figur 4    eine Darstellung einer weiteren bevorzugten Ausführungsform des erfindungsgemäßen zweidimensionalen Barcodes;

Figur 4A     das Detail A aus Figur 4;

Figur 5     eine Darstellung einer weiteren bevorzugten Ausführungsform des erfindungsgemäßen zweidimensionalen Barcodes;

Figur 5A     das Detail A aus Figur 5;

Figur 6     eine schematische Darstellung einer bevorzugten Ausführungsform der erfindungsgemäßen Druckeinrichtung;

Figur 7     eine schematische Darstellung eines Details der Druckeinrichtung aus Figur 6;

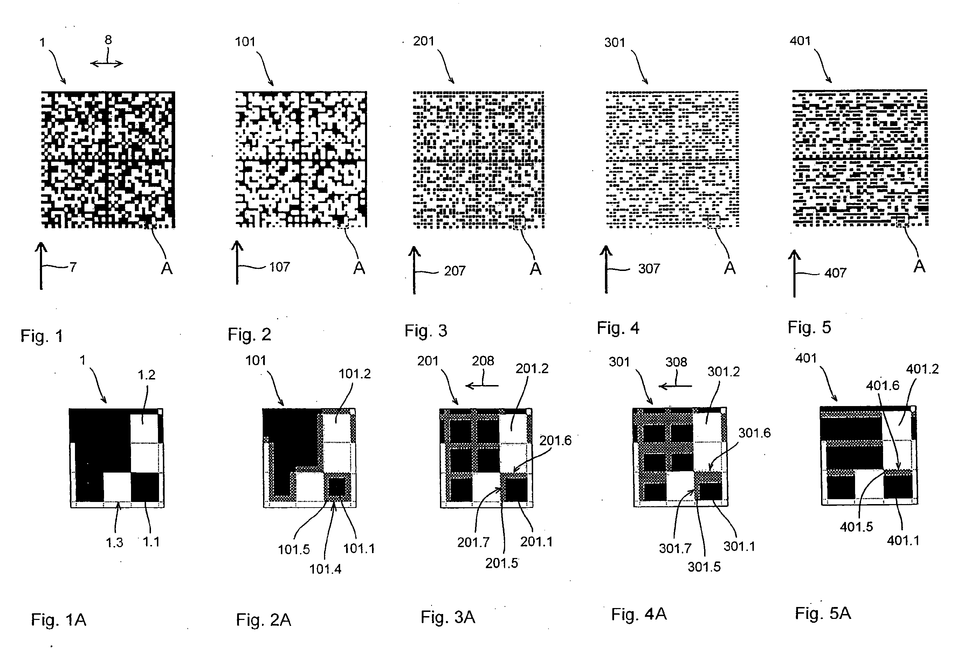

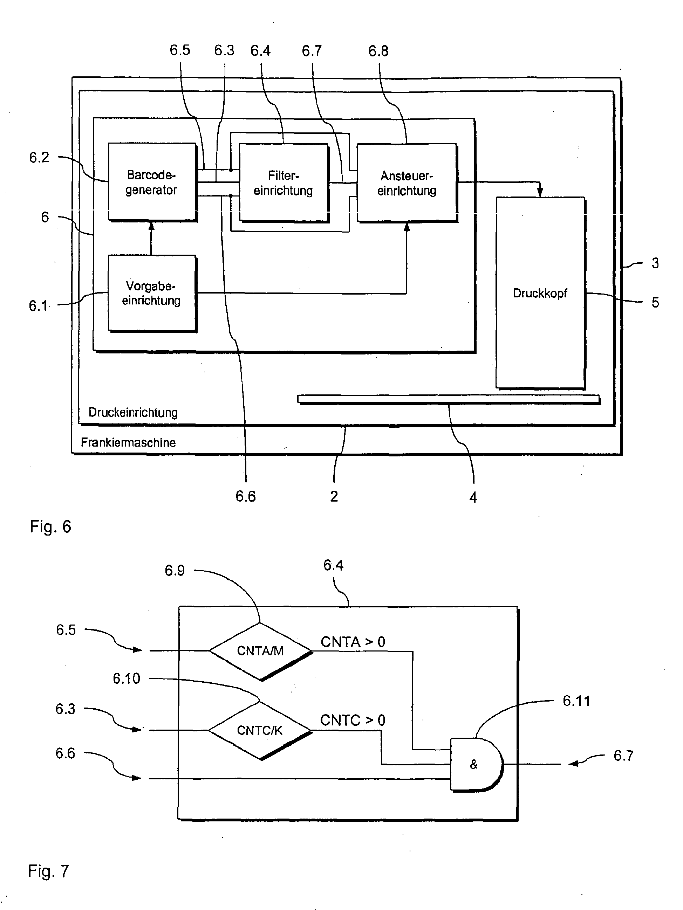

Im Folgenden wird unter Bezugnahme auf die Figuren 1, 1A und 6 eine bevorzugte Ausführungsform des erfindungsgemäßen zweidimensionalen Barcodes 1 beschrieben, der mit der Druckeinrichtung 2 aus Figur 6 generiert werden kann.

Die Druckeinrichtung 2 ist Bestandteil einer Frankiermaschine 3, die Poststücke, wie beispielsweise einen Brief 4 mit Frankierabdrucken versieht. Hierzu wird der Brief 4 an den Druckdüsen eines nach dem Tintenstrahlprinzip arbeitenden Druckkopfs 5 der Druckeinrichtung 2 vorbei geführt. Eine Steuereinrichtung 6 der Druckeinrichtung 2 steuert den Druckkopf 5 dabei so an, dass dieser den Frankierabdruck erzeugt.

Die Steuereinrichtung 6 umfasst eine Vorgabeeinrichtung 6.1, über die der Frankierabdruck nach bestimmten Kriterien vorgegeben wird. Der Frankierabdruck enthält dabei neben dem zweidimensionalen Barcode 1 noch weitere Teile wie Klartext und freie Graphik, Die Basisinformation zur Bildung des Barcodes 1 wird von der Vorgabeeinrichtung 6.1 an einen Barcodegenerator 6.2 vorgegeben, der die Barcodedaten, also die Barcodeinformation, als seriellen Datenstrom auf der Leitung 6.3 an eine Filtereinrichtung 6.4 liefert. Das Signal der Leitung 6.5 liefert dabei den Synchrontakt der Daten, während das Signal der Leitung 6.6 neue Druckzeilen einleitet.

Die Filtereinrichtung 6.4 manipuliert die Barcodedaten im Sinne der vorliegenden Erfindung, wie weiter unten noch näher erläutert wird. Das Signal der Leitung 6.5 liefert dabei den Synchrontakt der Daten, während das Signal der Leitung 6.6 neue Druckzeilen einleitet.

Von der Filtereinrichtung 6.4 werden die manipulierten Barcodedaten dann über eine Leitung 6.7 an eine Ansteuereinrichtung 6.8 weitergegeben, welche diese Daten in den Datenstrom mit den übrigen von der Vorgabeeinrichtung 6.1 kommenden Daten des Frankierabdrucks integriert und hieraus die Ansteuersignale für den Druckkopf 5 des Druckers generiert.

Bei dem Barcode 1 handelt es sich um einen zweidimensionalen Barcode mit 40 x 40 Bildfeldern in Form von Modulen 1.1, 1.2. Die Module 1.1, 1.2 sind matrixartig angeordnet, wie in Figur 1 durch die - in der Realität nicht vorhandenen - gepunkteten Linien 1.3 angedeutet ist. Der Barcode 1 wurde unter Verwendung des Data Matrix Codes ECC200 auf einem Frankierbereich einer Höhe von 1,0 Zoll in einer ersten Richtung 8 senkrecht zur Druckrichtung 7 erzeugt.

Der im Barcodegenerator 6.2 verwendete Data Matrix Code ECC200 gibt standardmäßig Barcodedaten vor, bei deren unveränderter Verwendung alle 1600 Module quadratisch sind und dieselbe Größe haben.

Der Druckkopf 5 weist eine Auflösung von 192 dpi auf, sodass sich bei einer vollen Ausnutzung der Höhe von 1,0 Zoll senkrecht zur Druckrichtung 7 für die 40 Module 1.1, 1.2 eine mittlere Modulhöhe von 4,8 Bildpunkten ergibt. Da die bedruckten, "dunklen" ersten Module 1.1 jedoch immer nur aus einer ganzzahligen Anzahl von Bildpunkten generiert werden können, könnten ohne Modifikation der Barcodedaten nur vier Bildpunkte pro erstem Modul 1.1 verwendet werden, was zu einer Nutzung von nur 160 Düsen der 192 Düsen des Druckkopfs 5 führen würde.

Um eine volle Ausnutzung der Höhe von 1,0 Zoll senkrecht zur Druckrichtung 7 und der Auflösung des Druckkopfs 5 zu erzielen, manipuliert die Filtereinrichtung 6.4 die Barcodedaten derart, dass die Module 1.1, 1.2 in der ersten Richtung 8 in der Regel eine Höhe von fünf Bildpunkten aufweisen, jedes fünfte Modul in der ersten Richtung aber eine Höhe von vier Bildpunkten, d. h. eine um einen Bildpunkt geringere Höhe aufweist. Damit Der Barcode 1 quadratisch bleibt, wird diese Modifikation auch in einer senkrecht zur ersten Richtung 8 verlaufenden zweiten Richtung, also der Druckrichtung 7, durchgeführt. Mit anderen Worten wird also in der ersten Richtung 8 bei jedem fünften Modul in der ersten Richtung 8 ein Bildpunkt weggelassen und in der zweiten Richtung 7 bei jedem fünften Modul in der zweiten Richtung 7 ein Bildpunkt weggelassen.

Somit ergibt sich für den Barcode 1 eine Größenverteilung der Module mit 1024 Modulen der Größe 5 x 5 Bildpunkte, 256 Modulen der Größe 5 x 4 Bildpunkte, 256 Modulen der Größe 4 x 5 Bildpunkte und 64 Modulen der Größe 4 x 4 Bildpunkte. Ein Großteil der Module, nämlich 1024 Module, hat also eine Größe von 5 x 5 Bildpunkten, was im Hinblick auf die Lesbarkeit des Barcodes 1 von Vorteil ist.

Gemäß Gleichung (1) ergibt sich mit $i = 5$ und $n = 5$ ein Skalierfaktor $S = 0,96$, sodass das mittlere Modul 4,8 Bildpunkte bzw. Pixel aufweist. Es können somit die 40 Module quer zur Druckrichtung 7 unter voller Ausnutzung der 192 Düsen des Druckkopfs 5 erzeugt werden.

Es versteht sich hierbei, dass bei anderen Varianten der Erfindung auch vorgesehen sein kann, dass speziell in den Bereichen des Barcodes, in denen keine Nutzinformation enthalten ist, entsprechend viele Bildpunkte der Module weggelassen werden können, um eine Anpassung an die Auflösung des Druckkopfs 5 zu erzielen. Hierfür eignen sich insbesondere die Rand- und/oder Zentralbereiche des Barcodes, die hauptsächlich zur Lage- und Rastererkennung dienen.

Im Folgenden wird unter Bezugnahme auf die Figuren 2, 2A und 6 eine weitere bevorzugte Ausführungsform des erfindungsgemäßen zweidimensionalen Barcodes 101 beschrieben, der mit der Druckeinrichtung 2 aus Figur 6 generiert werden kann. Die Steuereinrichtung 6 weist dann lediglich eine entsprechend modifizierte Filtereinrichtung 6.4 auf.

Der Barcode 101 unterscheidet sich von dem Barcode 1 aus Figur 1 dadurch, dass dank der Filterung durch die modifizierte Filtereinrichtung 6.4 bei den bedruckten ersten Modulen 101.1 in denjenigen Randbereichen 101.4 eine vollständige Reihe von Bildpunkten weggelassen ist, d. h. nicht gedruckt ist, in denen eine Kante des Moduls 101.1 an ein unbedrucktes Modul 101.2 angrenzt. Dies ist in Figur 2A durch die schraffierten - in der Realität nicht bedruckten - Bereiche 101.5 angedeutet.

Mit anderen Worten hat das gezeigte Modul 101.1 zwar nach wie vor eine bestimmte Grö-βe, beispielsweise 5 x 5 Bildpunkte, die tatsächlich bedruckte Fläche ist jedoch kleiner. Beim gezeigten Modul 101.1 mit vier angrenzenden unbedruckten Modulen sind dies dann beispielsweise 3 x 3 Bildpunkte.

Durch das Weglassen der Bildpunkte im an ein unbedrucktes Modul angrenzenden Randbereich wird verhindert, dass Tinte in den Bereich des unbedruckten Moduls hinein verläuft. Hierdurch ergibt sich eine verbesserte Lesbarkeit des Barcodes 101.

Es versteht sich hierbei, dass das unter Berücksichtigung der Nachbarmodule erfolgende Weglassen der Bildpunkte im Randbereich mit der oben im Zusammenhang mit Figur 1 beschriebenen Skalierung kombiniert werden kann. Dabei kann das im Zusammenhang mit Figur 2 beschriebene Weglassen der Bildpunkte auch auf Module verringerter Größe angewendet werden kann. Mit anderen Worten kann das Weglassen der Bildpunkte im Randbereich aus Figur 2 auch bei Modulen verringerter Größe, beispielsweise mit 5 x 4 oder 4 x 4 Bildpunkten, angewendet werden, sodass sich deren bedruckte Fläche noch weiter reduziert. Ebenso ist es bei diesen Modulen bereits verringerter Größe aber auch möglich, das Weglassen der Bildpunkte im Randbereich dann nicht vorzunehmen.

Im Folgenden wird unter Bezugnahme auf die Figuren 3, 3A, 6 und 7 eine weitere bevorzugte Ausführungsform des erfindungsgemäßen zweidimensionalen Barcodes 201 beschrieben, der mit der Druckeinrichtung 2 aus Figur 6 generiert werden kann. Die Steuereinrichtung 6 weist dann lediglich eine entsprechend modifizierte Filtereinrichtung 6.4 auf.

Der Barcode 201 unterscheidet sich von dem Barcode 1 aus Figur 1 dadurch, dass dank der Filterung durch die modifizierte Filtereinrichtung 6.4 bei jedem bedruckten ersten Modul - unabhängig von seinen Nachbarmodulen - in den Randbereichen 201.6 und 201.7 eine vollständige Reihe von Bildpunkten weggelassen ist, d. h. nicht gedruckt ist. Dies ist in Figur 3A durch die schraffierten - in der Realität nicht bedruckten - Bereiche 201.5 angedeutet. Bei den Randbereichen 201.6 handelt es sich dabei um die Kanten der Module, die in die Druckrichtung 207 weisen, während es sich bei den Randbereichen 201.7 um die Kanten der Module handelt, die in die senkrecht zur Druckrichtung 207 verlaufende Richtung 208 weisen.

Mit anderen Worten hat das gezeigte Modul 201.1 zwar nach wie vor eine bestimmte Grö-βe, beispielsweise 5 x 5 Bildpunkte, die tatsächlich bedruckte Fläche ist jedoch kleiner, nämlich dann 4 x 4 Bildpunkte.

Durch das Weglassen der Bildpunkte in den Randbereichen 201.6 und 201.7 wird verhindert, dass Tinte in den Bereich des dort angrenzenden gegebenenfalls unbedruckten Moduls hinein verläuft. Es hat sich gezeigt, dass vor allem mit dieser Filterung eine deutlich verbesserte Lesbarkeit des Barcodes 201 erzielt werden kann.

Es versteht sich hierbei, dass das Weglassen der Bildpunkte im Randbereich mit der oben im Zusammenhang mit Figur 1 beschriebenen Skalierung kombiniert werden kann. Dabei kann das im Zusammenhang mit Figur 3 beschriebene Weglassen der Bildpunkte auch auf Module verringerter Größe angewendet werden kann. Mit anderen Worten kann das Weglassen der Bildpunkte im Randbereich aus Figur 3 auch bei Modulen verringerter Größe, beispielsweise mit 5 x 4 oder 4 x 4 Bildpunkten, angewendet werden, sodass sich deren bedruckte Fläche noch weiter reduziert. Ebenso ist es bei diesen Modulen bereits verringerter Größe aber auch möglich, das Weglassen der Bildpunkte im Randbereich dann nicht vorzunehmen.

Figur 7 zeigt im Detail die Gestaltung der Filtereinrichtung 6.4 für die soeben im Zusammenhang mit Figur 3 beschriebene Filterung, d. h. Modifizierung der Barcodedaten des Barcodegenerators 6.2.

Die Komponenten 6.9 (CNTA) und 6.10 (CNTB) sind übliche Frequenzteiler. Sie zählen periodisch vom eingestellten Presetwert M bzw. K abwärts und wechseln dann von Null zum Presetwert usw. Während der Dauer des Zählerstandes Null ist der jeweilige Ausgang Null. Die Presetwert M bzw. K wird so gewählt, dass die gewünschten Modulbreiten bzw.- längen gezählt werden. Das nachgeschaltete UND-Gatter 6.11 filtert somit die jeweiligen Randbildpunkte der Module aus. Auf die Darstellung der Resetleitung für die Initialisierung nach dem Einschalten wurde aus Übersichtsgründen verzichtet.

Im Folgenden wird unter Bezugnahme auf die Figuren 4, 4A, und 6 eine weitere bevorzugte Ausführungsform des erfindungsgemäßen zweidimensionalen Barcodes 301 beschrieben, der mit der Druckeinrichtung 2 aus Figur 6 generiert werden kann. Die Steuereinrichtung 6 weist dann lediglich eine entsprechend modifizierte Filtereinrichtung 6.4 auf.

Der Barcode 301 unterscheidet sich von dem Barcode 1 aus Figur 1 dadurch, dass dank der Filterung durch die modifizierte Filtereinrichtung 6.4 bei jedem bedruckten ersten Modul - unabhängig von seinen Nachbarmodulen - in den Randbereichen 301.6 zwei vollständige Reihen von Bildpunkten weggelassen sind, d. h. nicht gedruckt sind, und in den Randbereichen 301.7 eine vollständige Reihe von Bildpunkten weggelassen ist, d. h. nicht gedruckt ist. Dies ist in Figur 4A durch die schraffierten - in der Realität nicht bedruckten - Bereiche 301.5 angedeutet. Bei den Randbereichen 301.6 handelt es sich dabei um die Kanten der Module, die in die Druckrichtung 307 weisen, während es sich bei den Randbereichen 301.7 um die Kanten der Module handelt, die in die senkrecht zur Druckrichtung 307 verlaufende Richtung 308 weisen.

Mit anderen Worten hat das gezeigte Modul 301.1 zwar nach wie vor eine bestimmte Grö-βe, beispielsweise 5 x 5 Bildpunkte, die tatsächlich bedruckte Fläche ist jedoch kleiner, nämlich dann 4 x 3 Bildpunkte.

Durch das Weglassen der Bildpunkte in den Randbereichen 301.6 und 301.7 wird verhindert, dass Tinte in den Bereich des dort angrenzenden gegebenenfalls unbedruckten Moduls hinein verläuft. Es hat sich gezeigt, dass auch mit dieser Filterung eine deutlich verbesserte Lesbarkeit des Barcodes 301 erzielt werden kann.

Es versteht sich hierbei wiederum, dass das Weglassen der Bildpunkte im Randbereich mit der oben im Zusammenhang mit Figur 1 beschriebenen Skalierung kombiniert werden kann. Dabei kann das im Zusammenhang mit Figur 4 beschriebene Weglassen der Bildpunkte auch auf Module verringerter Größe angewendet werden kann. Mit anderen Worten kann das Weglassen der Bildpunkte im Randbereich aus Figur 4 auch bei Modulen verringerter Größe, beispielsweise mit 5 x 4 oder 4 x 4 Bildpunkten, angewendet werden, sodass sich deren bedruckte Fläche noch weiter reduziert. Ebenso ist es bei diesen Modulen bereits verringerter Größe aber auch möglich, das Weglassen der Bildpunkte im Randbereich dann nicht vorzunehmen.

Im Folgenden wird unter Bezugnahme auf die Figuren 5, 5A und 6 eine weitere bevorzugte Ausführungsform des erfindungsgemäßen zweidimensionalen Barcodes 401 beschrieben, der mit der Druckeinrichtung 2 aus Figur 6 generiert werden kann. Die Steuereinrichtung 6 weist dann lediglich eine entsprechend modifizierte Filtereinrichtung 6.4 auf.

Der Barcode 401 unterscheidet sich von dem Barcode 1 aus Figur 1 dadurch, dass dank der Filterung durch die modifizierte Filtereinrichtung 6.4 bei jedem bedruckten ersten Modul - unabhängig von seinen Nachbarmodulen - in den Randbereichen 401.6 eine vollständige Reihe von Bildpunkten weggelassen ist, d. h. nicht gedruckt ist. Dies ist in Figur 5A durch die schraffierten - in der Realität nicht bedruckten - Bereiche 401.5 angedeutet. Bei den Randbereichen 401.6 handelt es sich dabei um die Kanten der Module, die in die Druckrichtung 407 weisen.

Mit anderen Worten hat das gezeigte Modul 401.1 zwar nach wie vor eine bestimmte Größe, beispielsweise 5 x 5 Bildpunkte, die tatsächlich bedruckte Fläche ist jedoch kleiner, nämlich dann 5 x 4 Bildpunkte.

Durch das Weglassen der Bildpunkte in den Randbereichen 401.6 wird verhindert, dass Tinte in den Bereich des dort angrenzenden gegebenenfalls unbedruckten Moduls hinein verläuft. Es hat sich gezeigt, dass auch mit dieser Filterung eine deutlich verbesserte Lesbarkeit des Barcodes 401 erzielt werden kann.

Es versteht sich hierbei wiederum, dass das Weglassen der Bildpunkte im Randbereich mit der oben im Zusammenhang mit Figur 1 beschriebenen Skalierung kombiniert werden kann. Dabei kann das im Zusammenhang mit Figur 5 beschriebene Weglassen der Bildpunkte auch auf Module verringerter Größe angewendet werden kann. Mit anderen Worten kann das Weglassen der Bildpunkte im Randbereich aus Figur 5 auch bei Modulen verringerter Größe, beispielsweise mit 5 x 4 oder 4 x 4 Bildpunkten, angewendet werden, sodass sich deren bedruckte Fläche noch weiter reduziert. Ebenso ist es bei diesen Modulen bereits verringerter Größe aber auch möglich, das Weglassen der Bildpunkte im Randbereich dann nicht vorzunehmen.

**Patentansprüche**

1. Druckeinrichtung mit einem nach dem Tintenstrahlprinzip arbeitenden Druckkopf (5) und einer den Druckkopf (5) zum Erzeugen eines zweidimensionalen Barcodes ansteuernden Steuereinrichtung (6), wobei

   - der Barcode (1; 101; 201; 301; 401) eine Matrix aus einer Mehrzahl von Bildfeldern (1.1, 1.2; 101.1, 101.2; 201.1, 201.2; 301.1, 301.2; 401.1, 401.2) umfasst,
   - der Barcode (1; 101; 201; 301; 401) wenigstens ein durch den Druckkopf (5) mit einer Mehrzahl von Bildpunkten bedrucktes erstes Bildfeld (1.1; 101.1; 201.1; 301.1; 401.1) und wenigstens ein im Wesentlichen unbedrucktes zweites Bildfeld (1.2; 101.2; 201.2; 301.2; 401.2) umfasst, und
   - die Steuereinrichtung zur Umwandlung von die Lage und Größe der Bildfelder (1.1, 1.2; 101.1, 101.2; 201.1, 201.2; 301.1, 301.2; 401.1, 401.2) definierenden Barcodedaten in Ansteuersignale für den Druckkopf (5) ausgebildet ist,

**dadurch gekennzeichnet, dass** die Steuereinrichtung (6) zur Umwandlung der Barcodedaten in Ansteuersignale für den Druckkopf (5) derart ausgebildet ist, dass wenigstens ein erstes Bildfeld (1.1; 101.1; 201.1; 301.1; 401.1) mit einer geringeren Anzahl von Bildpunkten bedruckt ist, als den Barcodedaten entspricht.

2. Druckeinrichtung nach Anspruch 1, **dadurch gekennzeichnet, dass** die Steuereinrichtung (6) zur Umwandlung der Barcodedaten in Ansteuersignale für den Druckkopf (5) derart ausgebildet ist, dass wenigstens ein erstes Bildfeld (1.1; 101.1; 201.1; 301.1; 401.1) eine geringere Größe aufweist, als den Barcodedaten entspricht.

3. Druckeinrichtung nach Anspruch 2, **dadurch gekennzeichnet, dass** das erste Bildfeld (1.1; 101.1; 201.1; 301.1; 401.1) in einem Bereich des Barcodes (1; 101; 201; 301; 401) angeordnet ist, der keine Nutzinformation enthält.

4. Druckeinrichtung nach einem der vorhergehenden Ansprüche, **dadurch gekennzeichnet, dass** die Steuereinrichtung (6) zum Weglassen von Bildpunkten in wenigstens einem ersten Randabschnitt (101.4; 201.6, 201.7; 301.6, 301.7; 401.6) des ersten Bildfelds (101.1; 201.1; 301.1; 401.1) ausgebildet ist.

5. Druckeinrichtung nach Anspruch 4, **dadurch gekennzeichnet, dass** die Steuereinrichtung (6) zum Weglassen wenigstens einer ersten Reihe benachbarter Bildpunkte in wenigstens einem ersten Randabschnitt (101.4; 201.6, 201.7; 301.6, 301.7; 401.6) des ersten Bildfelds (101.1; 201.1; 301.1; 401.1) ausgebildet ist.

6. Druckeinrichtung nach Anspruch 4 oder 5, **dadurch gekennzeichnet, dass** der erste Randabschnitt (101.4; 201.6, 201.7; 301.6, 301.7; 401.6) an ein zweites Bildfeld (1.2; 101.2; 201.2; 301.2; 401.2) angrenzt.

7. Druckeinrichtung nach einem der Ansprüche 4 bis 6, **dadurch gekennzeichnet, dass** die Steuereinrichtung (6) zum Weglassen von Bildpunkten in allen Randabschnitten (101.4) des ersten Bildfelds (101.1) ausgebildet ist, die an ein zweites Bildfeld (101.2) angrenzen.

8. Druckeinrichtung nach einem der Ansprüche 4 bis 7, **dadurch gekennzeichnet, dass** die Steuereinrichtung (6) zum Weglassen von Bildpunkten in wenigstens einem ersten Randabschnitt (201.6, 201.7; 301.6, 301.7; 401.6) aller ersten Bildfelder (201.1; 301.1; 401.1) ausgebildet ist.

9. Druckeinrichtung nach Anspruch 8, **dadurch gekennzeichnet, dass** der erste Randabschnitt (201.7; 301.7) in eine erste Richtung (208; 308) weist.

10. Druckeinrichtung nach einem der vorhergehenden Ansprüche, **dadurch gekennzeichnet, dass** die Steuereinrichtung (6) zur Umwandlung der Barcodedaten in Ansteuersignale für den Druckkopf (5) derart ausgebildet ist, dass wenigstens in einer ersten Richtung (8) jedes i-te Bildfeld (1.1, 1.2; 101.1, 101.2; 201.1, 201.2; 301.1, 301.2; 401.1, 401.2) in der ersten Richtung (8) eine geringere Größe aufweist, als den Barcodedaten entspricht.

11. Druckeinrichtung nach Anspruch 10, **dadurch gekennzeichnet, dass** die Steuereinrichtung (6) zur Umwandlung der Barcodedaten in Ansteuersignale für den Druckkopf (5) derart ausgebildet ist, dass in einer zur ersten Richtung (8) quer verlaufenden zweiten Richtung (7) des jedes k-te Bildfeld (1.1, 1.2; 101.1, 101.2; 201.1, 201.2; 301.1, 301.2; 401.1, 401.2) in der zweiten Richtung eine geringere Größe aufweist, als den Barcodedaten entspricht, wobei insbesondere i = k ist.

12. Druckeinrichtung nach einem der vorhergehenden Ansprüche, **dadurch gekennzeichnet, dass** die Steuereinrichtung (6) zur Umwandlung der Barcodedaten in Ansteuersignale für den Druckkopf (5) derart ausgebildet ist, dass alle ersten Bildfelder (201.1; 301.1; 401.1) des Barcodes (201; 301; 401) mit einer geringeren Anzahl von Bildpunkten bedruckt sind, als den Barcodedaten entspricht.

13. Druckeinrichtung nach einem der vorhergehenden Ansprüche, **dadurch gekennzeichnet, dass** die Steuereinrichtung (6) eine Filtereinrichtung (6.4) zur Reduktion der Anzahl von Bidpunkten des ersten Bildfelds (1.1; 101.1; 201.1; 301.1; 401.1) umfasst.

14. Frankiermaschine mit einer Druckeinrichtung (2) nach einem der vorhergehenden Ansprüche.

15. Zweidimensionaler Barcode, der

    - eine Matrix aus einer Mehrzahl von Bildfeldern (1.1, 1.2; 101.1, 101.2; 201.1, 201.2; 301.1, 301.2; 401.1, 401.2) umfasst,

- wenigstens ein durch einen nach dem Tintenstrahlprinzip arbeitenden Druckkopf (5) mit einer Mehrzahl von Bildpunkten bedrucktes erstes Bildfeld (1.1; 101.1; 201.1; 301.1; 401.1) und wenigstens ein im Wesentlichen unbedrucktes zweites Bildfeld (1.2; 101.2; 201.2; 301.2; 401.2) umfasst, und

**dadurch gekennzeichnet, dass**

wenigstens ein erstes Bildfeld (1.1; 101.1; 201.1; 301.1; 401.1) derart mit einer reduzierten Anzahl von Bildpunkten bedruckt ist, dass sich in dem ersten Bildfeld (1.1; 101.1; 201.1; 301.1; 401.1) eine bedruckte Fläche ergibt, die im Wesentlichen höchstens gleich der Fläche des zweiten Bildfeldes (1.2; 101.2; 201.2; 301.2; 401.2) ist.

**16.** Zweidimensionaler Barcode nach Anspruch 16, **dadurch gekennzeichnet, dass** die bedruckte Fläche des ersten Bildfelds (1.1; 101.1; 201.1; 301.1; 401.1) geringer ist als die Fläche des zweiten Bildfeldes (1.2; 101.2; 201.2; 301.2; 401.2).

**17.** Zweidimensionaler Barcode nach Anspruch 16 oder 17, **dadurch gekennzeichnet, dass** er unter Verwendung von die Lage und eine konstante Größe der Bildfelder definierenden Barcodedaten erzeugt wurde und das erste Bildfeld (1.1; 101.1; 201.1; 301.1; 401.1) mit einer geringeren Anzahl von Bildpunkten bedruckt ist, als den Barcodedaten entspricht.

**18.** Zweidimensionaler Barcode nach Anspruch 17, **dadurch gekennzeichnet, dass** wenigstens ein erstes Bildfeld (1.1; 101.1; 201.1; 301.1; 401.1) eine geringere Größe aufweist, als den Barcodedaten entspricht.

**19.** Zweidimensionaler Barcode nach Anspruch 18, **dadurch gekennzeichnet, dass** das erste Bildfeld (1.1; 101.1; 201.1; 301.1; 401.1) in einem Bereich des Barcodes (1; 101; 201; 301; 401) angeordnet ist, der keine Nutzinformation enthält.

**20.** Zweidimensionaler Barcode nach einem der Ansprüche 15 bis 19, **dadurch gekennzeichnet, dass** in wenigstens einem ersten Randabschnitt (101.4; 201.6, 201.7; 301.6, 301.7; 401.6) des ersten Bildfelds (101.1; 201.1; 301.1; 401.1) Bildpunkte weggelassen sind.

**21.** Zweidimensionaler Barcode nach Anspruch 20, **dadurch gekennzeichnet, dass** in wenigstens einem ersten Randabschnitt (101.4; 201.6, 201.7; 301.6, 301.7; 401.6) des ersten Bildfelds (101.2; 201.2; 301.2; 401.2) wenigstens eine erste Reihe benachbarter Bildpunkte weggelassen ist.

**22.** Zweidimensionaler Barcode nach Anspruch 20 oder 21, **dadurch gekennzeichnet, dass** der erste Randabschnitt (101.4; 201.6, 201.7; 301.6, 301.7; 401.6) an ein zweites Bildfeld (101.2; 201.2; 301.2; 401.2) angrenzt.

**23.** Zweidimensionaler Barcode nach einem der Ansprüche 20 bis 22, **dadurch gekennzeichnet, dass** in allen Randabschnitten (101.4) des ersten Bildfelds, die an ein zweites Bildfeld (101.2) angrenzen, Bildpunkte weggelassen sind.

**24.** Zweidimensionaler Barcode nach einem der Ansprüche 20 bis 23, **dadurch gekennzeichnet, dass** in wenigstens einem ersten Randabschnitt (201.6, 201.7; 301.6, 301.7; 401.6) aller ersten Bildfelder (201.1; 301.1; 401.1) Bildpunkte weggelassen sind.

**25.** Zweidimensionaler Barcode nach Anspruch 24, **dadurch gekennzeichnet, dass** der erste Randabschnitt (201.7; 301.7) in eine erste Richtung (208; 308) weist.

**26.** Zweidimensionaler Barcode nach einem der Ansprüche 15 bis 25, **dadurch gekennzeichnet, dass** wenigstens in einer ersten Richtung (8) des jedes i-te Bildfeld (1.1) in der ersten Richtung eine geringere Größe als das zweite Bildfeld (1.2) aufweist.

**27.** Zweidimensionaler Barcode nach Anspruch 26, **dadurch gekennzeichnet, dass** in einer zur ersten Richtung (8) quer verlaufenden zweiten Richtung (7) des jedes k-te Bildfeld (1.1) in der zweiten Richtung eine geringere Größe als das zweite Bildfeld (1.2) aufweist, wobei insbesondere i = k ist.

**28.** Zweidimensionaler Barcode nach einem der Ansprüche 15 bis 25, **dadurch gekennzeichnet, dass** alle ersten Bildfelder (1.1; 101.1; 201.1; 301.1; 401.1) derart mit einer reduzierten Anzahl von Bildpunkten bedruckt sind, dass sich in dem jeweiligen ersten Bildfeld eine bedruckte Fläche ergibt, die im Wesentlichen höchstens gleich der Fläche des zweiten Bildfeldes (1.2; 101.2; 201.2; 301.2; 401.2) ist.

29. Frankierabdruck mit einem zweidimensionalen Barcode (1; 101; 201; 301; 401) nach einem der Ansprüche 15 bis 27.

Fig. 1          Fig. 2          Fig. 3          Fig. 4          Fig. 5

Fig. 1A         Fig. 2A         Fig. 3A         Fig. 4A         Fig. 5A

EP 1 681 172 A2

6.5   6.3   6.4   6.7        6.8

6.2

6

6.1

| Barcode-generator | Filter-einrichtung | Ansteuer-einrichtung |

Vorgabe-einrichtung

Druckkopf

3

5

Druckeinrichtung

Frankiermaschine

6.6        2        4

Fig. 6

6.9        6.4

6.5

6.10

6.3

6.6

CNTA/M        CNTA > 0

CNTC/K        CNTC > 0

6.11

&        6.7

Fig. 7